**Europäisches Patentamt**

**European Patent Office**

**Office européen des brevets**

(19)

(11) Veröffentlichungsnummer: **0 101 405**
**A1**

(12) # EUROPÄISCHE PATENTANMELDUNG

(21) Anmeldenummer: **83810294.5**

(22) Anmeldetag: **30.06.83**

(51) Int.Cl.³: **B 60 P 1/46**

(30) Priorität: **16.07.82 DE 3226633**

(43) Veröffentlichungstag der Anmeldung:
**22.02.84 Patentblatt 84/8**

(84) Benannte Vertragsstaaten:
**AT BE CH DE FR GB IT LI NL SE**

(71) Anmelder: **SCHWEIZERISCHE ALUMINIUM AG**

**CH-3965 Chippis(CH)**

(72) Erfinder: **Mittelmann, Gerhard**
**Schlosstrasse 5**
**D-7763 Oehningen(DE)**

(72) Erfinder: **Maier, Peter**
**Oberstrasse 28**
**D-7703 Rielasingen 2(DE)**

(54) **Ladebordwand.**

(57) Eine Ladeborwand für eine Pritsche od. dgl. von Fahrzeugen mit einer Betätigungseinrichtung für die gegenüber der Pritsche ortsveränderliche Ladebordwand soll platz- und gewichtssparend sein sowie in einfacher Weise funktionieren.

Zur Lösung dieser Aufgabe führt, daß die Ladebordwand (4) mit einem Rohr (8) etwa in Höhe der Ladefläche (6) versehen ist, welches zumindest einen Antrieb (9) zum Abklappen und/oder vertikalen Verfahren der Ladebordwand (4) aufnimmt.

Fig.2

EP 0 101 405 A1

Ladebordwand

---

Die Erfindung betrifft eine Landebordwand für eine
Pritsche od. dgl. von Fahrzeugen mit einer Betätigungseinrichtung für die gegenüber der Pritsche ortsveränderliche Ladebordwand.

Insbesondere Lastkraftwagen weisen häufig eine Ladefläche
auf, welche nicht kippbar ist und deshalb zum Be- oder
Entladen schwerer Güter mit einer Ladebordwand versehen sein muß, die aus der Vertikalen abklappbar sowie
in ihrer Höhe verstellbar ist.

Zum Erzeugen dieser Bewegungsabläufe finden hydraulische
Antriebsorgane Anwendung. In der Regel sind beidseits
des Lastkraftwagens hydraulische Zylinder mit Kolben
angeordnet, wobei letztere über ein geeignetes Gestänge mit der Ladebordwand verbunden sind.

Abgesehen davon, daß die gesamte hydraulische Einrichtung
sehr aufwendig ist, belastet sie auch durch ihr hohes
Gewicht, so daß die Möglichkeiten einer zusätzlichen
Beladung wegen der Einhaltung des straßenverkehrsrechtlich zulässigen Gesamtgewichts des Fahrzeugs
vermindert werden. Weiterhin ist die Hydraulik sehr
störanfällig.

Der Erfinder hat sich zum Ziel gesetzt, eine Ladebordwand der vorgenannten Art zu entwickeln, welche diese
Nachteile nicht aufweist, platz- und gewichtsparend ist,
sowie in einfacher Weise funktioniert.

Zur Lösung dieser Aufgabe führt, daß die Ladebordwand
mit einem Rohr etwa in Höhe der Ladefläche versehen
ist, welches zumindest einen Antrieb zum Abklappen und/
oder Absenken der Ladebordwand aufnimmt.

Vorzugsweise handelt es sich bei dem Antrieb um einen
Elektromotor mit Stator und Rotor.

Dieser Elektromotor nimmt sehr wenig Raum in Anspruch,
zumal er in der Ladebordwand selbst integriert ist
und so auch ein sonst notwendiges Gestänge entfällt.
Im Verhältnis zu den bekannten Betätigungseinrichtungen
weist der Elektromotor ein geringes Gewicht auf, so daß
die Beladungskapazität des Fahrzeugs erhöht wird.
Weiterhin ist keine zusätzliche Energiequelle notwendig,
da der Elektromotor an das im Fahrzeug vorhandene
elektrische Netz angeschlossen wird.

Erfindungsgemäß ist einmal vorgesehen, daß der Rotorteil des Motors in dem Rohr und der Statorteil an der
Ladefläche festliegt.

Dabei soll der Statorteil außerhalb des Motors mit einem
Gewindebolzen verbunden sein, welcher eine an der Ladefläche festgelegte Lasche durchdringt und an dieser
beispielsweise mittels einer Mutter sowie Gegenmutter
fest montiert ist, wobei Stator und Gewindebolzen
Teil einer Drehachse der Ladebordwand sind.

Durch diese Anordnung ist es auf einfache Weise möglich,
die Ladebordwand von der etwa vertikalen Schließlage in
die etwa horizontale Gebrauchslage und wieder zurück zu
bewegen.

Weiterhin ist aber auch vorgesehen, daß der Statorteil
des Motors in dem Rohr festgelegt ist und der Rotorteil
ein Zahnrad antriebt, welches mit einer Zahnung einer
Schiene in Eingriff steht. Damit bestimmt die Form der
Schiene auch die Bewegung der Ladebordwand.

Um das Zahnrad in Eingriff mit der Zahnung der Schiene
zu halten ist auf der Zahnung fernen Innenfläche der
Schiene eine Druckrolle angeordnet, welche zwischen
zwei an der Ladebordwand und/oder dem Rohr festgelegten Profilstücken drehbar lagert, wobei das eine
Profilstück ebenfalls ein Lager für das Zahnrad zum
Einhalten eines Abstands aufweist, der dem Abstand einer
Lauffläche der Druckrolle von einer Stirnfläche eines
Zahnes des Zahnrades entspricht. Da dieser Abstand
wiederum der Dicke der Schiene zwischen der Innenfläche und einem Zahngrund der Zahnung entspricht,
kann die Ladebordwand einwandfrei in der von der
Schiene vorgegebenen Lage gehalten werden.

Der unbedingt erforderliche Bewegungsablauf für eine
Ladebordwand beschränkt sich in der Regel auf ein Abklappen aus der vertikalen in die horizontale Lage
sowie auf ein Absenken der Ladebordwand in horizontaler
Lage bis etwa auf Endbodenhöhe.

Dementsprechend hat es sich als besonders günstig erwiesen, daß die Schiene krückstockartig aus einem
geraden Abschnitt, welcher in Gebrauchslage senkrecht
auf dem Boden aufsteht, sowie einem gebogenen Abschnitt besteht, welcher an dem Fahrzeug, insbesondere an der Ladefläche, angelenkt ist. Die Innenfläche des gebogenen Abschnitts (Krücke) beschreibt
eine kreisbogenartige Krümmungslinie zwischen einem
Anfangspunkt, welcher zwischen geradem und gebogenem
Abschnitt liegt, sowie einem Endpunkt. Dies Krümmungslinie hat auch einen Krümmungsmittelpunkt, der im
vorliegenden Beispiel der Drehachse der Druckrolle
entspricht. Dadurch ist die Innenfläche des gebogenen
Abschnitts im wesentlichen der Lauffläche der Druckrolle angepaßt.

Die Verbindungslinie vom Endpunkt zum Krümmungsmittelpunkt und die Verbindungslinie vom Anfangspunkt zu Krümmungsmittelpunkt weisen innerhalb
der Krümmungslinie einen Winkel von mehr als 180° auf.
Durch diese Anordnung ist es möglich, die Schiene
über einen Winkel von mehr als 90° zu ihrer vertikalen
Stellung auf dem Erdboden unter die Ladefläche zu
klappen, was gleichzeitig die Schließlage der Ladebordwand bedeutet.

Wird der Motor bei dieser Schließlage in Bewegung gesetzt, so läuft das Zahnrad in der ersten Phase den
gebogenen Abschnitt der Schiene ab und die Schiene
klappt von der Ladefläche in ihre vertikale Stellung.
Diese Klappbewegung wird in einfacher Weise durch
ein nahe dem Endpunkt beginnendes Langloch in dem
gebogenen Abschnitt sowie durch ein in dieses Langloch einragenden, an der Ladefläche angeformte Bolzen
begrenzt.

Sobald der Bolzen das Ende des Langlochs erreicht hat,
läuft das Zahnrad die Zahnung der Schiene ab. Dabei
wird zuerst die Ladebordwand aus der vertikalen Lage
in eine horizontale Lage gebracht. Dies ist am Ende
des gebogenen Abschnitts, also bei dem Anfangspunkt,
geschehen. Sodann läuft das Zahnrad den geraden
Abschnitt der Schiene ab, was gleichzeitig ein
Absenken der Ladebordwand in horizontaler Lage
bedeutet. Die Rückführung der Ladebordwand geschieht in umgekehrter Weise.

Zum Zwecke einer höheren Stabilisierung der Schiene
insbesondere in Gebrauchslage beim Absenken der Ladebordwand hat es sich als günstig erwiesen, in dem
gebogenen Abschnitt der Schiene ein gerades Zwischenstück einzuschalten, welches etwa senkrecht zu dem
geraden Abschnitt der Schiene angeordnet ist.
Dadurch werden die Lastdruckverhältnisse, welche insbesondere beim Absenken der Ladebordwand problematisch
sind, verbessert.

Die Erfindung umfaßt aber andere Ausgestaltungen der
Schiene, welche je nach den Bedürfnissen den geforderten
Verhältnissen angepaßt werden kann. So ist es beispielsweise möglich die Schiene parallel zu den Vertikalladebordwandkanten anzuordnen. Beim Abklappen der
Schienen zusammen mit der Ladebordwand kann so beispielsweise eine Ladebrücke zu einer Laderampe hergestellt werden, wobei die Ladebordwand selbstfahrend
den Zwischenraum zwischen Laderampe und Ladefläche des
Fahrzeugs überbrückt.

Je nach den Gegebenheiten ist es möglich einen Antrieb der oben beschriebenen Art nur einseitig oder beidseitig der Laderampe einzusetzen.

Die Steuerung des Antriebs der Laderampe geschieht durch handelsübliche Steuerelemente, wie beispielsweise automatische Abschalteinrichtungen bei bestimmter Lage.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

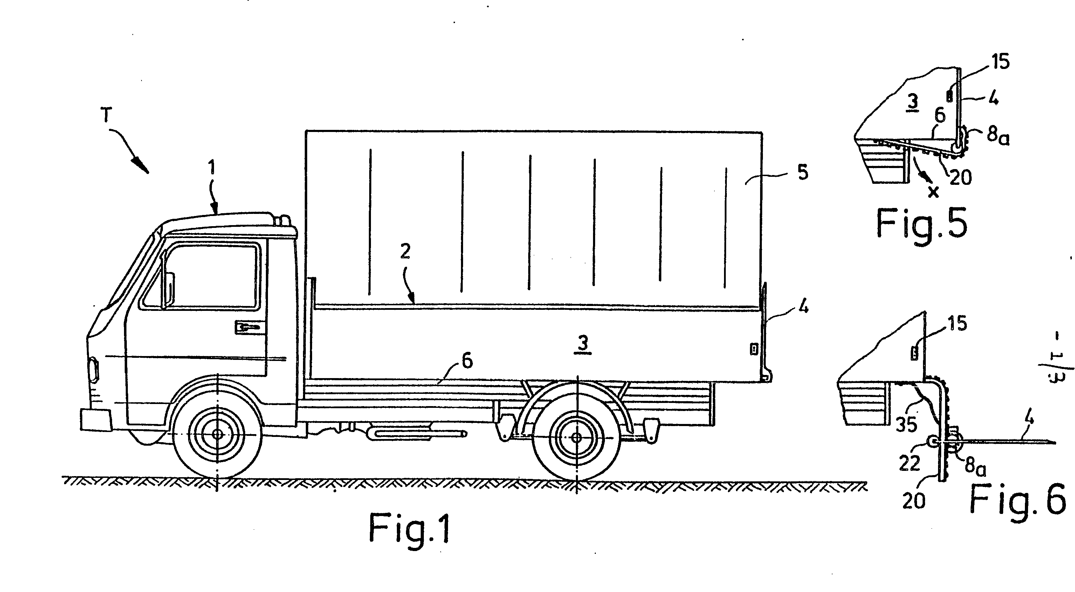

Fig.    1    eine Seitenansicht eines Transportfahrzeuges;

Fig.    2    einen teilweise geschnittenen vergrößerten Ausschnitt aus Fig. 1 einer Ladebordwand mit Antrieb in Schrägsicht;

Fig.    3    ein weiteres Ausführungsbeispiel nach Fig. 2;

Fig.    4    eine Seitenansicht eines weiteren Ausführungsbeispiels nach Fig. 2;

Fig.    5    die Ladebordwand nach Fig. 3 skizzenhaft in Schließlage;

Fig.    6    die Ladebordwand nach Fig. 3 skizzenhaft in Gebrauchslage;

Fig.    7    einen Teil einer Ladebordwand in einer gegenüber Fig. 6 geänderten Gebrauchslage.

Ein Transportfahrzeug T weist hinter einem Fahrerhaus 1 eine Pritsche 2 mit Seitenbordwänden 3, einer Ladefläche 6 sowie einer Ladebordwand 4 auf. Die Pritsche 2 ist von einer über -- nicht dargestellte -- Spriegel gezogenen Plane 5 überdeckt.

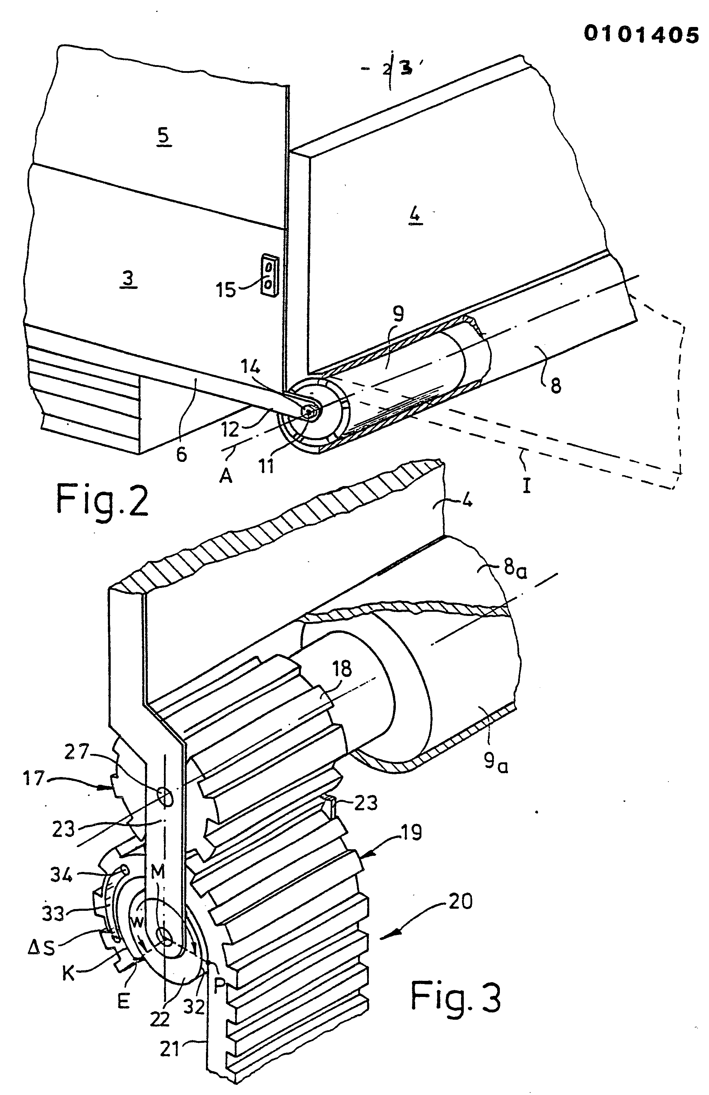

An die Ladebordwand 4 ist nach Fig. 2 ein Rohr 8 angeformt, in welchem ein Motor 9 mit seinem -- nicht dargestellten -- Rotorteil festliegt. Der -- ebenfalls nicht dargestellte -- Stator dient gleichzeitig als Teil einer gedachten Drehachse A, um welche sich der Rotor mit dem Rohr 8 und der Ladebordwand 4 dreht.

Der Stator ist außerhalb des Motors 9 mit einem Gewindebolzen 11 an einer Lasche 12 festgelegt, welche an die
Ladefläche 6 angeformt ist. Die Fixierung des Gewindebolzens 11 an der Lasche 12 geschieht in einfacher
Weise durch eine Mutter 14 einerseits und eine --
nicht dargestellte -- Gegenmutter andererseits der
Lasche 12.

Durch einen Schalter 15 wird der Motor 9 in Betrieb
gesetzt, wobei sich der Rotor mit dem Rohr 8 um den
Stator bzw. die Drehachse A dreht. Einfache --
nicht dargestellte -- elektrische Endschalter
ermöglichen ein automatisches Abschalten des Motors
in der in Fig. 2 dargestellter Schließlage sowie in der
etwa 90° dazu verlaufenden -- gestrichelt dargestellten
-- Kragstellung I der Ladebordwand 4.

Eine weitere Ausgestaltung des Antriebs der Ladebordwand 4 nach Fig. 3 sieht wiederum einen in einem an
der Ladebordwand 4 angeformten Rohr 8a festliegenden
Motor 9a vor. Allerdings ist hier der Statorteil des
Motors 9a mit dem Rohr 8a fest verbunden, während
der Rotorteil außerhalb des Motors ein Zahnrad 17
antreibt.

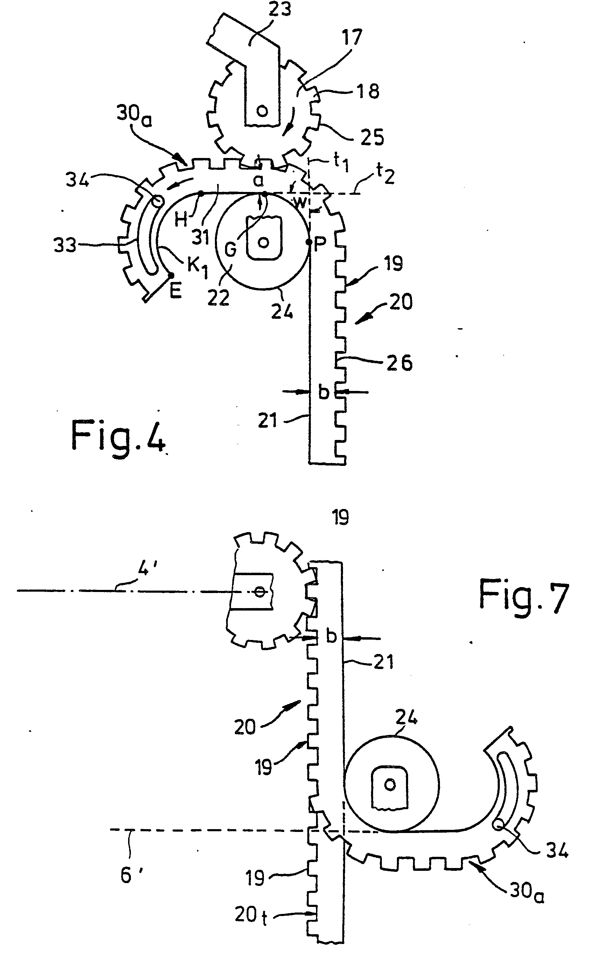

Zahnrad 17 greift mit seinen Zähnen 18 in die Außenzahnung 19 einer querschnittlich krückstockartig geformten
Schiene 20 ein. An der glatten Innenfläche 21
der Schiene 20 läuft eine Druckrolle 22 ab, welche
zwischen zwei am Rohr 8a und der Ladebordwand 4 festgelegten Profilstücken 23 drehbar lagert. Dabei entspricht
der Abstand a (Fig. 4) zwischen Lauffläche 24 der Druckrolle 22 und Stirnfläche 25 von Zahn 18 des ebenfalls
mit einem Lager 27 an einem Profilstück 23 festgelegten
Zahnrades 17 der Dicke b der Schiene 20 zwischen Zahngrund 26 und Innenfläche 21.

Die Schiene 20 besteht aus einem geraden Abschnitt 29
und einem gebogenen Kurvenabschnitt 30, welcher einen
Krümmungsabschnitt K der Innenfläche 21 aufweist, der in Fig. 3
an einem Punkt P beginnt und an      Punkt E endet.
Das Maß der Krümmung K entspricht          etwa
der Krümmung der Lauffläche 24 der Druckrolle 22,
wobei die gedachten Verbindungslinien zwischen dem
Punkt P und dem Krümmungsmittelpunkt M und dem
Punkt E und dem Mittelpunkt M einen Winkel w von
mehr als 180° bilden und der Kurvenbogen zwischen
E und P eine Länge $\Delta$ s aufweist.

Nach Fig. 4 ist in dem gebogenen Abschnitt 30a ein
gerades Schienenzwischenstück 31 zwischen Punkten H
und G der Krümmungslinie K1 angeordnet, wobei die
Krümmungslinientangente $t_1$ im Punkt P und die Krümmungslinientangente $t_2$ im Punkt G ein Winkel v von
etwa 90° einschließen.

Abschnitt 30 bzw. 30a weist nahe dem Krümmungslinienendpunkt E ein Langloch 33 auf, in welches ein von
der Ladefläche 6 -- nicht dargestellt -- abkragender
Bolzen 34 einragt.

Nach Fig. 5 ist bei geschlossener Ladebordwand 4 die
Schiene 20 zur Unterseite der Ladefläche 6 hin zurückgeklappt. Wird nun der Motor 9a mittels des Schalters
15 in Betrieb gesetzt, rollt das Zahnrad 17 zunächst
den gebogenen Abschnitt 30 der Schiene 20 ab und die
Schiene 20 klappt nach unten in Richtung x von der
Ladefläche 6 weg.

Dabei wird sie durch den das Langloch 33 abfahrenden Bolzen 34 geführt und die Bewegung in Richtung x in einer etwa lotrechten Stellung angehalten (Fig. 6), in der auf nicht gezeigte Weise eine gegebenenfalls automatische Arretierung der Schiene 20 erfolgt. Nunmehr setzt sich das Zahnrad 17 zusammen mit dem Motor 9a, dem Rohr 8a und der Ladebordwand 4 in Bewegung und rollt die festliegende Schine 20 ab. Dabei wirkt die Druckrolle 22 einem zuweitgehenden Abklappen der Ladebordwand 4 entgegen. Mit 35 ist eine Verkabelung des Motors 9a mit dem Schalter 15 angedeutet.

Wird nun der Motor 9a in umgedrehte Richtung in Bewegung gesetzt, rollt das Zahnrad 17 im Zusammenspiel mit der Druckrolle 22 die Schiene 20 hinauf und klappt die Ladebordwand 4 beim Übergang in den gebogenen Abschnitt 30 in Schließlage. Nach Anschlag der Ladebordwand 4 an den Seitenbordwänden 3 wird die automatische Arretierung gelöst und das Zahnrad 17 rollt weiter die Zahnung 19 der Schiene 20 im gebogenen Abschnitt 30 ab, so daß die Schiene, geführt über Bolzen 34 und Langloch 33, zur Ladefläche 6 hin zurückklappt.

Bei einem in Fig. 7 nur angedeuteten Ausführungsbeispiel kann die Schiene 20 -- oder eine entsprechend mit Zähnen 19 versehene parallele Schiene $20_t$ -- so ausgebildet sein, daß sie ein Aufwärtsklettern des Zahnrads 19 erlaubt, dank dessen die durch eine Gerade 4'symbolisierte Ladebordwand nach Horizontalstellung über das Niveau der Ladefläche -- Gerade 6'-- angehoben werden kann.

Patentansprüche

1. Ladebordwand für eine Pritsche od.dgl. von Fahrzeugen mit einer Betätigungseinrichtung für die gegenüber der Pritsche ortsveränderliche Ladebordwand,

dadurch gekennzeichnet,

dass die Ladebordwand (4) mit einem Rohr (8, 8a) etwa in Höhe der Ladefläche (6) versehen ist, welches zumindest einen Antrieb (9, 9a) zum Abklappen und/oder vertikalen Verfahren der Ladebordwand (4) aufnimmt.

2. Ladebordwand nach Anspruch 1, dadurch gekennzeichnet, dass der Antrieb (9, 9a) aus einem Elektromotor mit Stator und Rotor besteht.

3. Ladebordwand nach Anspruch 1 und 2, dadurch gekennzeichnet, dass der Rotorteil des Motors (9) in dem Rohr (8) und der Statorteil an der Ladefläche (6) festgelegt ist.

4. Ladebordwand nach Anspruch 3, dadurch gekennzeichnet, dass der Statorteil ausserhalb des Motors (9) mit einem Gewindebolzen (11) verbunden ist, welcher eine an der Ladefläche (6) festgelegte Lasche (12) durchdringt und an dieser beispielsweise mittels einer Mutter (14) sowie Gegenmutter fest montiert ist, wobei Stator und Gewindebolzen (14) Teil einer Drehachse (A) der Ladebordwand (4) sind.

5. Ladebordwand nach Anspruch 1 und 2, dadurch gekennzeichnet, dass der Statorteil des Motors (9a) in dem Rohr (8a) festgelegt ist und der Rotorteil ein Zahnrad (17) antreibt, welches mit einer Zahnung (19) einer Schiene (20) in Eingriff steht.

6. Ladebordwand nach Anspruch 5, dadurch gekennzeichnet, dass an der Zahnung (19) fernen Innenfläche (21) der Schiene (20) eine Druckrolle (22) angeordnet ist, welche zwischen zwei an der Ladebordwand (4) und/oder dem Rohr (8a) festgelegten Profilstücken (23) drehbar lagert, wobei das eine Profilstück (23) auch ein Lager (27) für das Zahnrad (17) zum Einhalten eines Abstands (a) aufweist, der dem Abstand einer Lauffläche (24) der Druckrolle (22) von einer Stirnfläche (25) eines Zahnes (18) des Zahnrades (17) bzw. einer Dicke (b) der Schiene (20) zwischen der Innenfläche (21) und einem Zahngrund (26) der Zahnung (19) entspricht.

7. Ladebordwand nach Anspruch 5 oder 6, dadurch gekennzeichnet, dass die Schiene (20) krückstockartig aus einem geraden Abschnitt (29) sowie einem gebogenen Abschnitt (30) besteht, dessen Innenfläche (21) eine um einen Krümmungsmittelpunkt (M) gelegte kreisbogenartige Krümmungslinie (K) zwischen einem Anfangspunkt (P) und einem Endpunkt (E) aufweist.

8. Ladebordwand nach Anspruch 7, dadurch gekennzeichnet, dass die Verbindungslinie vom Endpunkt (E) zum Krümmungsmittelpunkt (M) mit der Verbindungslinie vom Anfangspunkt (P) zum Mittelpunkt (M) innerhalb der Krümmungslinie (K) einen Winkel (w) von mehr als 180°
aufweist.

9.  Ladebordwand nach Anspruch 5 oder 6, dadurch gekennzeichnet, dass die Schiene (20) krückstockartig aus
    einem geraden Abschnitt (29) sowie einem gebogenen Abschnitt (30a) besteht, dessen Innenfläche (21) eine
    kreisbogenartige Krümmungslinie ($K_1$) zwischen einem An-
    fangspunkt (P) und einem Endpunkt (E) aufweist, wobei
    in einem Bereich zwischen zwei Punkten (H und G) ein
    gerades Zwischenstück (31) eingeschaltet ist und eine
    an den Punkt (G) angelegte Tangente ($t_2$) mit einer im
    Punkt (P) an die Krümmungslinie ($K_1$) angelegten Tangen-
    te ($t_1$) einen Winkel (v) von etwa 90° bildet.

10. Ladebordwand nach wenigstens einem der Ansprüche 5 bis
    9, dadurch gekennzeichnet, dass nahe dem Endpunkt (E)
    in dem Abschnitt (30 bzw. 30a) ein Langloch (33) vorgesehen ist, in welches ein beispielsweise an der Ladefläche (6) festliegender Bolzen (34) als Begrenzung der
    Drehbewegung der Schiene (20) einragt und dass die
    Schiene (20) bzw. der Bolzen (34) verriegelbar ausge-
    bildet ist.

Fig.1

Fig.5

Fig.6

-1/3

0101405

0101405

Fig.2

Fig.3

Fig.4

Fig.7

## EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-U-7 044 882  (PRINTING) <br> * Anspruch; Seite 3, Zeilen 1-6; Figur * | 1,2,5 | B 60 P    1/46 |
| A | US-A-3 054 160  (LE TOURNEAU) <br> * Figur 3 * | 1,2 | |
| A | DE-C-  453 109  (WIRZ) <br> * Figur 3 * | 1 | |
| A | DE-C-1 000 244  (SIEGENER EISENBAHNBEDARF) | | |
| A | CH-A-  130 044  (RIEDESSER) | | |

RECHERCHIERTE
SACHGEBIETE (Int. Cl. ³)

B 60 P    1/00

Der vorliegende Recherchenbericht wurde für alle Patentansprüche erstellt.

| Recherchenort <br> BERLIN | Abschlußdatum der Recherche <br> 13-10-1983 | Prüfer <br> LUDWIG H J |
|---|---|---|